# EUROPÄISCHE PATENTSCHRIFT

(11) **EP 4 081 826 B1**
(45) Veröffentlichungstag und Bekanntmachung des Hinweises auf die Patenterteilung: **05.03.2025**
(21) Anmeldenummer: 21766630.4
(22) Anmeldetag: 24.08.2021
(51) Int. Cl.: G01S 13/88, G01S 7/02

(54) **ERMITTLUNG EINES WÄRMEDURCHGANGS VON GEBÄUDEN**
DETERMINING A HEAT THROUGHPUT OF BUILDINGS
DÉTERMINATION D'UN DÉBIT DE CHALEUR DE BÂTIMENTS

(30) Priorität: 25.08.2020 DE 102020122132
(43) Veröffentlichungstag der Anmeldung: 02.11.2022
(73) Patentinhaber: Deutsches Zentrum für Luft- und Raumfahrt e.V., 53227 Bonn (DE)
(72) Erfinder: PEICHL, Markus, 82284 Grafrath (DE); DILL, Stephan, 80339 München (DE); HAAS, Alexander, 82234 Weßling (DE); GORZALKA, Philip, 51069 Köln (DE); ESTEVAM SCHMIEDT, Jacob, Köln 51069 (DE); HOFFSCHMIDT, Bernhard, 51467 Bergisch Gladbach (DE)
(74) Vertreter: Rösler Rasch van der Heide & Partner
(86) Internationale Anmeldenummer: PCT/EP2021/073411
(87) Internationale Veröffentlichungsnummer: WO 2022/043332

(56) Entgegenhaltungen:
- CN-U- 208 171 449
- HAAS ALEXANDER ET AL: "Layer determination of building structures with SAR in near field environment", 2019 16TH EUROPEAN RADAR CONFERENCE (EURAD), EUMA, 2 October 2019 (2019-10-02), pages 209 - 212, XP033663880
- ESTEVAM-SCHMIEDT JACOB ET AL: "Remote sensing techniques for building models and energy performance studies of buildings", EBC ANNEX 71, FIRST EXPERT MEETING, 28 April 2017 (2017-04-28), XP055855770
- HAAS ALEXANDER ET AL: "Theoretical and experimental investigations of microwave signatures for characterization of building structures", 2017 18TH INTERNATIONAL RADAR SYMPOSIUM (IRS), GERMAN INSTITUTE OF NAVIGATION-DGON, 28 June 2017 (2017-06-28), pages 1 - 10, XP033142208, DOI: 10.23919/IRS.2017.8008089
- CHERNYSHOV VLADIMIR N. ET AL: "Microwave method of nondestructive control of thermal characteristics of building material", INDUSTRIAL LABORATORY. DIAGNOSTICS OF MATERIALS, vol. 84, no. 10, 26 October 2018 (2018-10-26), XP055855413, ISSN: 1028-6861, Retrieved from the Internet <URL:http://eolit-p.internal.epo.org/api/orders/1114038/pdf> DOI: 10.26896/1028-6861-2018-84-10-29-34

## Beschreibung

Die Erfindung betrifft ein Verfahren zum Ermitteln eines Maßes für einen Wärmedurchgang eines Gebäude-Bauelements, ein Radarsystem mit einer Recheneinheit zum Ausführen eines solchen Verfahrens, sowie ein Fluggerät mit einem solchen Radarsystem.

In der Veröffentlichung von Haas, Alexander und Peichl, Markus und Dill, Stephan (2017) "Theoretical and experimental investigations of microwave signatures for characterization of building structures" in: 2012: 13th International Radar Symposium (IRS), 2017.07.28 - 2017.07.30, Prag, Tschechische Republik, werden die theoretischen Grundlagen über den Lauf von Mikrowellen in geschichteten Medien vorgestellt. Ferner werden Simulationen von Radar-Signaturen, sowie Messungen für ebensolche gezeigt. Verschiedene Werkstoffe von Schichten werden analysiert.

Ferner ist aus der Veröffentlichung von Haas, Alexander und Peichl, Markus und Dill, Stephan (2019) "Layer determination of buidling structures with SAR in near field environment" der European Radar Conference, 2019-10-02 - 2019-10-05, Paris, Frankreich, bekannt, ein Radargerät mit synthetischer Apertur zu verwenden, um mittels Mikrowellenstrahlung hochgenaue Bilder von Gebäude-Außenwänden zu erzeugen. Hierbei werden zunächst Messungen vorgeschlagen, die eine einzelne Schicht der Gebäude-Außenwand betrachten, schließlich jedoch auch mehrschichtige Messungen.

Die Veröffentlichung von Estevam Schmiedt, Jacob und Cerra, Daniele und Dahlke, Dennis und Dill, Stephan und Ge, Nan und Göttsche, Joachim und Haas, Alexander und Heiden, Uta und Israel, Martin und Kurz, Franz und Linkiewicz, Magdalena und Patel, Dhruvkumar und Peichl, Markus und Plattner, Stefan und Pless, Sebastian und Schiricke, Björn und Schorn, Christian und Tiddens, Arne und Zhu, Xiao Xiang (2017) "Remote sensing techniques for building models and energy performance studies of buildings" aus EBC Annex 71: Building energy performance assessment based on in-situ measurements, 26.-28. Apr. 2017, Loughborough, UK, gibt einen Überblick zu Methoden aus dem Stand der Technik und ihre Anwendung auf Gebäudefassaden. Neue Entwicklungen und ein Ausblick darauf werden außerdem vorgestellt.

Außerdem gibt die Veröffentlichung von Chernyshov, Vladimir N. et al.: "Microwave method of nondestructive control of thermal characteristics of building material", INDUSTRIAL LABORATORY. DIAGNOSTICS OF MATERIALS, Bd. 84, Nr. 10, 26. Oktober 2018, eine Methode zur Analyse von Gebäudebauteilen an, indem Proben mit Mikrowellen erhitzt werden.

Die CN 208 171 449 U betrifft schließlich ein Wärmeaustritts-Identifikationssystem für Gebäude, welches eine Infrarot-Wärmebildkamera und einen Mikrowellen-Feuchtigkeitsmesser umfasst; hierbei wird mittels Infrarotstrahlung ein Infrarotbild mit Infrarotbilddaten für eine Wärmeleckstelle erzeugt. Mit dem Mikrowellen-Feuchtigkeitsmesser wird ein Mikrowellen-Scan an der Wärmeleckstelle durchgeführt, woraus Mikrowellenscan-Daten generiert werden; das System umfasst ferner ein Übertragungssubsystem, das eine Nahbereichsübertragungsvorrichtung, einen Prozessor und eine Fernbereichsübertragungsvorrichtung umfasst. Die Nahbereichsübertragungsvorrichtung ist mit der Infrarot-Wärmebildkamera und mit dem Mikrowellen-Feuchtigkeitsmesser verbunden, um die Infrarotbilddaten der Infrarot-Wärmebildkamera des Mikrowellen-Feuchtigkeitsmessers zu empfangen und an den Prozessor zu übermitteln; der Server ist mit der Fernbereichsübertragungsvorrichtung verbunden, und der Prozessor sendet die Infrarotbilddaten und die Mikrowellenscan-Daten über die Fernbereichsübertragungsvorrichtung an den Server.

Aufgabe der Erfindung ist es, ein Maß für einen Wärmedurchgang eines Bauelements für ein Gebäude oder an einem Gebäude verbessert zu ermitteln.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Ermitteln eines Maßes für einen Wärmedurchgang eines Gebäude-Bauelements, aufweisend die Schritte:
- Emittieren von Mikrowellensignalen in einer Vielzahl von Frequenzen auf ein jeweiliges Bauelement,
- Erfassen von am jeweiligen Bauelement und an Übergängen von Schichten im jeweiligen Bauelement reflektierten Mikrowellensignalen,
- Ermitteln einer Anzahl der Schichten im jeweiligen Bauelement aus den reflektierten Mikrowellensignalen insbesondere durch Laufzeitbestimmung der reflektierten Mikrowellensignale,
- Elektromagnetisches Modellieren des jeweiligen Bauelements in einem Rechnermodell, wobei das Rechnermodell einen Schichtaufbau des jeweiligen Bauelements mit der ermittelten Anzahl der Schichten aufweist und als variable Parameter jeweilige Schichtdicken und jeweilige komplexe Permittivitäten der Schichten umfasst,
- Vorgeben von Startwerten für die variablen Parameter des Rechnermodells,
- iteratives Anpassen des Rechnermodells durch wiederholtes Variieren der Werte der variablen Parameter und durch Auswählen eines Satzes von Werten der variablen Parameter anhand einer Übereinstimmung zwischen
   i) einer analytisch oder durch Simulation ermittelten Reflexionscharakteristik des Rechnermodells und
   ii) einer aus einem Verhältnis zwischen den emittierten und den erfassten reflektieren Mikrowellensignalen ermittelten tatsächlichen Reflexionscharakteristik,
- für jede der im Rechnermodell mit dem ausgewählten Satz der variablen Parameter modellierten Schichten: Ermitteln einer jeweiligen Wärmeleitfähigkeit der jeweiligen Schicht auf Basis eines ersten vorgegebenen Datensatzes, wobei der erste vorgegebene Datensatz einen Zusammenhang zwischen komplexen Permittivitäten und Wärmeleitfähigkeiten angibt, und
- Ermitteln des Maßes für den Wärmedurchgang des jeweiligen Bauelements aus den ermittelten Schichtdicken und Wärmeleitfähigkeiten der jeweiligen Schichten.

Im Rechnermodell werden insbesondere zuvor festgelegte, interessierende Frequenzwerte verwendet.

Das Maß für den Wärmedurchgang wird insbesondere als Wärmedurchgangskoeffizient ausgedrückt, der im Falle einer ebenen Wand den Wärmestrom bezogen auf eine Fläche und bezogen auf einen Temperaturunterschied angibt, wenn beide Seiten der Wand von Luft mit unterschiedlicher Temperatur umgeben sind. Der Wärmedurchgang gibt daher die Energieeffizienz eines Bauelements für ein Gebäude an und ermöglicht Aussagen darüber, ob verhältnismäßig höhere oder niedrigere Heizkosten für ein Gebäude anfallen werden. Der Wärmedurchgangskoeffizient wird typischerweise im Bauwesen auch als U-Wert bezeichnet und wird bevorzugt in der Einheit [W/(m²K)] (Watt pro Quadratmeter und Kelvin) angegeben. Anstelle des Wärmedurchgangskoeffizienten kann als Maß für den Wärmedurchgang auch ein Wert des Wärmedurchgangswiderstands angegeben werden, der insbesondere das inverse Analogon zum Wärmedurchgangskoeffizienten ist. In anderen Worten gibt das Maß für den Wärmedurchgang des Gebäude-Bauelements an, wie gut das Gebäude-Bauelement beispielsweise im Winter bei kalten Außentemperaturen einen beheizten Innenraum des Gebäudes gegen Auskühlung schützt.

Demgegenüber bezeichnet der Begriff der Wärmeleitfähigkeit eine Stoffeigenschaft, die die Fähigkeit des Stoffes zur Wärmeleitung über einen Wärmestrom angibt. In anderen Worten gibt die Wärmeleitfähigkeit prinzipiell die Möglichkeit an, ob sich ein Stoff zur thermischen Isolation von Gebäuden eignet und wird typischerweise in der Einheit [W/(mK)] (Watt pro Meter und Kelvin) angegeben. Die Wärmeleitfähigkeit wird bevorzugt als spezifische Größe als Wärmeleitfähigkeitskoeffizient ausgedrückt. Äquivalent dazu kann die Wärmeleitfähigkeit als Wärmewiderstand, ebenfalls typischerweise eine spezifische Größe, ausgedrückt werden, der insbesondere der Kehrwert der Wärmeleitfähigkeit ist. Welches Maß für die Wärmeleitfähigkeit verwendet wird, als Nominalwert oder inverser Wert, und in welcher Einheit, spielt für die Ausführung des Verfahrens als solches keine Rolle.

Der Begriff des Gebäude-Bauelements bezieht sich auf ein Bauelement für ein Gebäude oder wahlweise auf ein Bauelement an einem Gebäude. So kann das Verfahren gemäß dem ersten Aspekt der Erfindung sowohl für einzelne freiliegende Bauelemente im Sinne von Mustern oder Proben angewendet werden als auch an fertigen Gebäuden. Der Begriff des Gebäude-Bauelements bezeichnet daher ein Bauelement für ein Gebäude oder wahlweise ein Bauelement an einem Gebäude, beispielsweise eine Wand, ein Boden, eine Decke, ein Dach, oder Ähnliches.

Die Mikrowellensignale sind von einer Antenne ausgesendete, definierte und damit vollständig bekannte Mikrowellen. Mikrowellen sind eine Form elektromagnetischer Strahlung im Bereich insbesondere zwischen 300 MHz und 300 GHz, das heißt im Bereich mit Wellenlängen zwischen 1 mm und 1 m. Die Mikrowellensignale werden in einer Vielzahl von Frequenzen in Richtung eines jeweiligen Bauelements abgestrahlt. Bevorzugt werden Mikrowellensignale in einem Frequenzbereich zwischen 0,1 und 50 GHz, besonders bevorzugt zwischen 0,5 und 20 GHz, weiterhin besonders bevorzugt zwischen 0,8 und 18 GHz emittiert. Während tiefere Frequenzen, beispielsweise im Bereich 0,1 GHz, eine erweiterte Eindringtiefe gegenüber hohen Frequenzen ermöglichen, benötigen die tieferen Frequenzen typischerweise auch größere Antennen. Daher ist insbesondere bei der Wahl der niedrigsten Frequenz ein Kompromiss zwischen Größe der Antenne und Eindringtiefe in das Material des Bauelements zu finden. Sehr hohe Frequenzen, beispielsweise im Bereich oberhalb von 18 oder 20 GHz, dringen typischerweise weniger tief in Materie ein, da wegen der typischerweise vorliegenden Dämpfungscharakteristik mit Tiefpassverhalten die hohen Frequenzen eher abgeschwächt werden als tiefere Frequenzen.

Die Mikrowellensignale werden in einer Vielzahl von Frequenzen emittiert. Dies erfolgt bevorzugt durch einen Frequenzdurchlauf (auch genannt "frequency sweep"), insbesondere durch ein Chirp- oder Frequenzschrittverfahren. Dabei wird ein Mikrowellensignal mit einem sinusförmigen Verlauf mit über der Zeit steigenden (oder sinkenden) Frequenzen erzeugt. Das ausgesendete Mikrowellensignal wird dabei für eine vorgegebene Zeitdauer verwendet, wobei beispielsweise am Beginn der Aussendung des Mikrowellensignals sehr tiefe Frequenzen beginnend mit einer Startfrequenz (beispielsweise 0,8 GHz) ausgesendet werden, und das Mikrowellensignal bis zum Ende hin der vorgegebenen Zeitdauer immer höhere Frequenzen aufweist, bis schließlich die Endfrequenz (beispielsweise 18 GHz) erreicht ist. Ein solcher Verlauf weist daher ein entsprechend breites Spektrum auf. Ein Frequenzdurchlauf eignet sich insbesondere zur Analyse der ausgesendeten und reflektierten Mikrowellen im Frequenzbereich. Demgegenüber eignet sich ein Impuls endlicher Breite der Mikrowellensignale, insbesondere mit idealerweise nadelförmigem Verlauf, insbesondere für eine Analyse im Zeitbereich. Andere Formen wie ein dreiecksförmiger oder ein gaußfunktion-ähnlicher Verlauf sind möglich. Ein solcher Impuls mit endlicher Breite weist ebenfalls eine Vielzahl von Frequenzen auf, im Gegensatz zum oben erwähnten Frequenzdurchlauf erscheinen hierbei jedoch die Vielzahl von Frequenzen (im Idealfall) zur gleichen Zeit, während beim Frequenzdurchlauf die Vielzahl der Frequenzen nacheinander erscheinen. In der Theorie sind beide Methoden äquivalent und ineinander umrechenbar. Es können technologische Gründe zur Auswahl herangezogen werden. Beiden genannten Beispielen ist jedoch gemeinsam, dass die Mikrowellensignale eine Vielzahl von Frequenzen aufweisen, und damit ein breites Spektrum von Frequenzen mit theoretisch gleichem Informationsgehalt abdecken.

Alternativ ist es möglich, ein Rauschsignal oder eine andere Signalform mit identischer Bandbreite den Mikrowellensignalen aufzuprägen, wobei unabhängig von der Signalform auch das emittierte Mikrowellensignal aufzuzeichnen ist, damit es definiert und damit vollständig bekannt ist.

Die Mikrowellensignale, die in Richtung des jeweiligen Bauelements ausgestrahlt werden, werden an der Oberfläche des Bauelements und an Schichtübergängen des Bauelements reflektiert. An diesen Übergängen zwischen Schichten des Bauelements ändert sich typischerweise die Lichtgeschwindigkeit, sodass dieser Übergang zu einem Wechsel im Wellenwiderstand führt und damit zu einer Teilreflexion der Mikrowellensignale. Da die Mikrowellensignale entlang ihres Laufes durch das jeweilige Bauelement wegen der endlichen Lichtgeschwindigkeit zu verschiedenen Zeiten einhergehend mit den Abständen der Schichtübergänge reflektiert werden, werden diese Echos der Mikrowellensignale zu verschiedenen Zeiten empfangen. Bevorzugt wird eine Laufzeitbestimmung verwendet (insbesondere mittels Zeit- bzw. Entfernungsprofil nach Umrechnung mit der Lichtgeschwindigkeit), um den zeit- bzw. ortsversetzten Empfang der Echos der Mikrowellensignale zu erkennen. Das Erfassen der reflektierten Mikrowellensignale erfolgt insbesondere kohärent, das heißt, dass Amplitude und Phase der reflektierten Mikrowellensignale erfasst werden.

Die Reflexionscharakteristik, insbesondere der zeitliche und örtliche Verlauf der Stärke der Reflexion, bestimmt sich insbesondere aus der Zahl der Schichten, den Schichtdicken und den komplexen Permittivitäten der jeweiligen Schichten. Eine komplexe Permittivität korreliert dabei direkt mit der Lichtgeschwindigkeit eines Mikrowellensignals im Durchlauf durch die jeweilige Schicht. Ein Reflexionsfaktor des Bauelements wird typischerweise komplex im Frequenzbereich mit Betrag und Phase angegeben, die Reflexionscharakteristik als reale Größe im Zeitbereich (insbesondere mit Zeit- oder Entfernungsprofil).

A priori ist jedoch im Allgemeinen der absolute Wert der Lichtgeschwindigkeit einer jeweiligen Schicht des Bauelements unbekannt, da deren (komplexe) Permittivität unbekannt ist, sodass neben der jeweiligen Schichtdicke auch die komplexe Permittivität durch die weiteren Verfahrensschritte anzupassen ist. Sollte in einem Sonderfall das jeweilige Material einer Schicht des Bauelements bekannt sein, wäre damit auch ein Schätzwert der Permittivität und damit der Lichtgeschwindigkeit für Mikrowellen im jeweiligen Material der Schicht bekannt. Dieser bekannte Schätzwert könnte daher festgelegt werden. Ist jedoch der genaue Schichtaufbau nicht exakt bekannt, wie es an bereits bestehenden Gebäuden zu erwarten ist, so ist gemäß den folgenden Schritten durch ein insbesondere iteratives Verfahren sowohl die jeweilige Schichtdicke als auch die jeweilige Permittivität einer Schicht zu ermitteln. Das iterative Anpassen des Rechnermodells durch wiederholtes Variieren der Werte der variablen Parameter kann unter Umständen in Einzelfällen durch eine analytische Lösung, insbesondere durch lineare Optimierung, ersetzt werden. Die Lösung, die in einem Schritt ausgeführt wird, kann jedoch grundsätzlich auf das iterative Anpassen und das wiederholte Variieren der Werte zurückgeführt werden, sodass beide Lösungen als äquivalent betrachtet werden können.

Der Begriff der Schicht bezeichnet dabei nicht notwendigerweise eine über das jeweilige Bauelement vollständig ausgedehnte kontinuierliche und homogene Schichtmaterial; der Begriff der Schicht ist vielmehr im Sinne eines einheitlichen Materials entlang einer Normalen auf das insbesondere flächenförmig ausgebildete Bauelement zu verstehen, wobei insbesondere entlang dieser Normalen die Mikrowellen das Bauelement durchlaufen. So führen auch beispielsweise Rohrleitungen, elektrische Kabel, Poren, Putz, Schrauben, Bohrlöcher, Dübel, Befestigungsmittel oder andere "Störungen" des jeweiligen Bauelements zu einem Übergang von Schichten. Die Schichten werden dabei insbesondere durch Materialänderung entlang einer gedachten Geraden durch das jeweilige Bauelement bestimmt. In der Praxis handelt es sich aufgrund der Antennenrichtcharakteristiken typischerweise um einen im Wesentlichen kegelabschnittsförmigen Volumenbereich entlang der gedachten Geraden, aus dem die messbare Wechselwirkung der Mikrowellen mit der Materie bzw. den Schichten erfolgt.

Im folgenden Schritt erfolgt das elektromagnetische Modellieren des jeweiligen Bauelements in einem Rechnermodell. Dieses Rechnermodell weist die oben aus der Reflexionscharakteristik bestimmte Anzahl der Schichten auf. Als variable Parameter des Rechnermodells werden die Schichtdicken und die jeweiligen komplexen Permittivitäten der Schichten verwendet. Die Schichtdicken bezeichnen dabei die Ausdehnung eines im Wesentlichen homogenen und zusammenhängenden Materials entlang einer Senkrechten auf das insbesondere flächig ausgebildete jeweilige Bauelement, wobei sich die Mikrowellensignale im Wesentlichen entlang dieser Senkrechten ausbreiten. Im Gegensatz zur Ausbreitung von Mikrowellen im Vakuum ist die Reflexionscharakteristik bezüglich Mikrowellen in Materie typischerweise abhängig von der Frequenz der Mikrowellensignale. Die komplexe Permittivität gibt daher gestützt auf das Konzept der komplexen Zahlen eine Amplitude und eine Phase für eine bestimmte jeweilige Frequenz wieder. So weist die komplexe Permittivität insbesondere einen Realteil und einen Imaginärteil auf, welche indirekt für das Reflexionsverhalten an einem Schichtübergang und eine Dämpfung durch Absorption in einer Schicht verantwortlich sind.

Die variablen Parameter des Rechnermodells, das heißt die jeweiligen Schichtdicken und die jeweiligen komplexen Permittivitäten werden bevorzugt durch ein iteratives Verfahren variiert, wobei zunächst Startwerte für diese variablen Parameter des Rechnermodells vorgegeben werden. Die Vorgabe der Startwerte der variablen Parameter wird vorteilhaft durch Vorwissen bestimmt, insbesondere dann, wenn beispielsweise bekannt ist, dass die meisten der (dickeren) Schichten aus typischen Baustoffen bestehen wie Beton oder Mauerstein, und mutmaßlich dünnere Schichten des Bauelements beispielsweise aus Putz, einer Isolierschicht oder einem Luftspalt. Typischerweise werden Startwerte für komplexe Permittivitäten von üblichen Baustoffen gewählt, insbesondere ein Realteil zwischen 1 und 10 und ein Imaginärteil zwischen 0,01 und 1. Folgend werden diese variablen Parameter als Parameterkombinationen des Rechnermodells modelliert und das insbesondere iterative Verfahren mit einer Auswahl eines Satzes der variablen Parameter beendet.

Die Auswahl der (wahrscheinlichsten) Werte der Variablenparameter erfolgt auf Basis einer insbesondere besten Übereinstimmung zwischen
i) einer analytisch oder durch Simulation ermittelten Reflexionscharakteristik des Rechnermodells und
ii) einer aus einem Verhältnis zwischen den emittierten und den erfassten reflektieren Mikrowellensignalen ermittelten tatsächlichen Reflexionscharakteristik.

Während der o.g. Punkt i) die auf Basis einer Rechnung ermittelte Reflexionscharakteristik betrifft, bezieht sich Punkt ii) auf die auf Basis einer Messung ermittelte Reflexionscharakteristik.

Bei i) wird für jeden der variierten Werte der variablen Parameter durch Simulation oder analytisch eine Reflexionscharakteristik des Rechnermodells ermittelt, wobei dann für jedes Tupel der variierten Werte der variablen Parameter genau eine Reflexionscharakteristik ermittelt wird. Über diese variierten Werte der variablen Parameter wird somit eine Vielzahl von Reflexionscharakteristiken des Rechnermodells erzeugt. Diese Vielzahl der Reflexionscharakteristiken wird mit einer ermittelten tatsächlichen Reflexionscharakteristik des jeweiligen Bauelements verglichen. Bevorzugt wird derjenige Satz, das heißt dasjenige Tupel, von variablen Parametern verwendet, deren zugeordnete durch Simulation oder analytisch ermittelte Reflexionscharakteristik am besten mit der ermittelten tatsächlichen Reflexionscharakteristik übereinstimmt.

Die Auswahl dieser Werte der variablen Parameter erfolgt anhand der insbesondere besten Übereinstimmung, wie oben erläutert. Bevorzugt wird ein Raster über einen vordefinierten Bereich von Werten mit einem vorgegebenen Abstand der variablen Parameter definiert, um mit den jeweiligen variablen Parametern die jeweilige Reflexionscharakteristik zu berechnen. Nach Berechnung aller Reflexionscharakteristiken für alle variablen Parameter des Rasters wird bevorzugt die beste Übereinstimmung mit der tatsächlich ermittelten Reflexionscharakteristik übermittelt. Alternativ bevorzugt wird ein Verfahren der nichtlinearen Optimierung verwendet, um eine gezielte Konvergenz der variablen Parameter auf eine beste Übereinstimmung hin zu erreichen, wobei die Übereinstimmung in eine Kostenfunktion überführt wird, die durch die nichtlineare Optimierung zu minimieren ist.

Das Verhältnis zwischen den emittierten und den erfassten reflektieren Mikrowellensignalen ermöglicht das Ermitteln der tatsächlichen Reflexionscharakteristik. Dabei wird bevorzugt eine Normierung der so erhaltenen Daten vorgenommen, was z.B. durch eine Kalibrierung mit bekannten Messstandards erfolgen kann. Dies dient insbesondere dazu, dass Mess- und Theorieergebnis für einen Vergleich die gleiche Skalierung aufweisen. Die Analyse erfolgt bevorzugt durch Korrelationsanalyse mit einer Zahl von Datenpunkten bevorzugt aus dem Bereich von 512 bis 4096 Datenpunkten, besonders bevorzugt aus dem Bereich von 1024 bis 2048 Datenpunkten. Die Zahl der Datenpunkte wird vorteilhaft an das verwendete Radarsystem angepasst. Bevorzugt wird eine Zahl von Datenpunkten aus Zweierpotenzen verwendet, da diese die effiziente Anwendung der schnellen Fourier-Transformation (FFT) erlauben, um zwischen Darstellung im Zeitbereich und Frequenzbereich wechseln zu können.

Während aus dem Rechnermodell einerseits ein Reflexionsfaktor als Maß für die Reflexionscharakteristik analytisch errechnet werden kann, kann alternativ bevorzugt dazu eine Simulation des Rechnermodells stattfinden, indem das Rechnermodell als Signaleingang virtuelle Mikrowellensignale erhält, die den tatsächlich ausgestrahlten Mikrowellensignalen entsprechen. Ein Ausgang des in einer Simulation verwendeten Rechnermodells sind dabei simulierte reflektierte Mikrowellensignale, die im Zeitbereich oder im Frequenzbereich mit den tatsächlich erfassten reflektierten Mikrowellensignalen des jeweiligen Bauelements verglichen werden können. Dagegen wird im Falle der Verwendung eines Reflexionsfaktors, der analytisch aus dem Rechnermodell ermittelt wird, der aus dem Rechnermodell berechnete Reflexionsfaktor mit einem tatsächlich ermittelten Reflexionsfaktors verglichen, wobei der tatsächlich ermittelte Reflexionsfaktor bevorzugt durch ein entsprechend kalibriertes Radarsystem zum Aussenden der Mikrowellensignalen und zum Erfassen der reflektierten Mikrowellensignale ermittelt wird. In anderen Worten werden bevorzugt die Parameterkombinationen miteinander anhand des Rechnermodells mit seinen Schichten zu einem rechnerischen Reflexionsfaktor im Frequenzbereich oder äquivalent zu einer Reflexionscharakteristik im Zeitbereich verrechnet und mit dem auf Basis einer Messung ermittelten Reflexionsfaktors verglichen.

Durch den Vergleich des aus dem Rechnermodell ermittelten Reflexionsfaktors und dem aus dem tatsächlichen Versuch empirisch ermittelten Reflexionsfaktor des jeweiligen Bauelements kann die Übereinstimmung überprüft werden und somit der am besten passende Satz von Werten der variablen Parameter des Rechnermodells ausgewählt werden. Somit steht ein Rechnermodell zur Verfügung, das mittels der ausgewählten Werte der variablen Parameter einen dem jeweiligen realen Bauelement entsprechenden Schichtaufbau umfasst.

Der erste vorgegebene Datensatz, der bevorzugt empirisch insbesondere mit einem entsprechenden (anderen) Messverfahren, ermittelt wurde, vermittelt einen generellen Zusammenhang, das heißt eine Gesetzmäßigkeit, zwischen komplexen Permittivitäten und Wärmeleitfähigkeiten, bevorzugt in Form einer Tabelle mit einer endlichen Zahl diskreter Stützstellen, deren Werte interpoliert werden können, oder in Form eines Graphen, oder einer linearen Funktion, oder einer Polynomfunktion oder Ähnlichem. Mit Hilfe dieses ersten vorgegebenen Datensatzes ist es möglich, der jeweiligen modellierten komplexen Permittivität des Rechnermodells mit dem ausgewählten Satz an variablen Parametern eine jeweilige Wärmeleitfähigkeit der jeweiligen Schicht im Rechnermodell zuzuordnen. In diesem empirischen Zusammenhang ist insbesondere der Zusammenhang zwischen einer jeweiligen komplexen Permittivität und einer Dichte eines Stoffes enthalten, und wiederum ein Zusammenhang zwischen der Dichte und der Wärmeleitfähigkeit des jeweiligen Stoffes, woraus sich insbesondere ein Gesamtzusammenhang zwischen einer jeweiligen komplexen Permittivität des Stoffes und der Wärmeleitfähigkeit des Stoffes ergibt.

Schließlich wird das Maß für den Wärmedurchgang aus den ermittelten Schichtdicken des Bauteils, die den ausgewählten Schichtdicken aus den variablen Parametern des Rechnermodells entsprechen, und aus den ermittelten komplexen Permittivitäten der Schichten, die den ausgewählten komplexen Permittivitäten der variablen Parameter entsprechen, ermittelt. Dies ist insbesondere dadurch möglich, dass die Wärmeleitfähigkeiten von Schichten mit bekannter Schichtdicke bekannt sind und dies insbesondere über eine Fläche des jeweiligen Bauelements.

Es ist daher eine vorteilhafte Wirkung der Erfindung, dass durch das Aussenden von Mikrowellensignalen auf ein Bauelement und dem Empfangen der reflektierten Mikrowellensignalen sehr schnell, berührungslos und zerstörungsfrei auf ein Maß für einen Wärmedurchgang des Bauelements geschlossen werden kann. Dies ermöglicht eine zügige Analyse über die Eigenschaften bezüglich einer Wärmeisolation von Gebäudeteilen oder Bauelementen für Gebäude.

Gemäß einer vorteilhaften Ausführungsform dient das Verfahren weiterhin zum Ermitteln eines Maßes für eine Wärmekapazität des Gebäude-Bauelements, weiterhin aufweisend die Schritte:
- für jede der im Rechnermodell mit dem ausgewählten Satz der variablen Parameter modellierten Schichten: Ermitteln einer jeweiligen spezifischen Wärmekapazität der jeweiligen Schicht auf Basis eines zweiten vorgegebenen Datensatzes, wobei der zweite vorgegebene Datensatz einen Zusammenhang zwischen komplexen Permittivitäten und spezifischen Wärmekapazitäten angibt, und
- Ermitteln einer gesamten Wärmekapazität des jeweiligen Bauelements aus den ermittelten jeweiligen Schichtdicken und den ermittelten spezifischen Wärmekapazitäten der jeweiligen Schichten.

Der zweite vorgegebene Datensatz gibt eine Gesetzmäßigkeit zwischen komplexen Permittivitäten und spezifischen Wärmekapazitäten im Allgemeinen an. Der Zusammenhang wird bevorzugt durch eine endliche Zahl von diskreten Stützstellen, die dann interpoliert werden können, angegeben; alternativ bevorzugt durch einen graphischen Zusammenhang oder eine lineare Funktion wie eine Gerade oder eine Polynomfunktion. Insbesondere umfasst der zweite vorgegebene Datensatz einen Zusammenhang, das heißt Gesetzmäßigkeit, zwischen Realteilen der komplexen Permittivitäten und spezifischen Wärmekapazitäten im Allgemeinen. Während die spezifische Wärmekapazität eine generalisierte Angabe abhängig von einer Masse ist, gibt die gesamte Wärmekapazität eine absolute Wärmekapazität des Bauelements an, wobei bei der gesamten Wärmekapazität die Masse des Bauelements bereits berücksichtigt ist.

Gemäß einer weiteren vorteilhaften Ausführungsform erfolgt das Emittieren der Mikrowellensignale und das Erfassen der reflektierten Mikrowellensignale durch eine Radarvorrichtung, wobei die Radarvorrichtung entlang eines Gebäudes bewegt wird und wobei in einer Vielzahl von Positionen der Radarvorrichtung gegenüber dem Gebäude das oben und im Folgenden beschriebene Verfahren wiederholt wird.

Indem die Radarvorrichtung entlang eines Gebäudes bewegt wird, insbesondere entlang einer Außenwand oder einer Innenwand des Gebäudes, kann das erfindungsgemäße Verfahren für prinzipiell beliebig große Bauelemente und ganze Gebäudeteile ausgeführt werden. Wird ein im Wesentlichen eindimensionaler Strahl an Mikrowellensignalen ausgesendet und die Radarvorrichtung in gerader Richtung bewegt, so kann ein zweidimensionales Bild des Bauelements bzw. Gebäudeteils ermittelt werden. Wird darüber hinaus die Radarvorrichtung auch noch in einer zur ersten geraden Richtung verschiedenen Richtung bewegt, sodass die Radarvorrichtung über eine Fläche des Bauelements bzw. des Gebäudeteils bewegt wird, so kann ein dreidimensionales Abbild im Rechnermodell erzeugt werden. Die Radarvorrichtung wird bevorzugt manuell bewegt, das heißt von einem Anwender geführt. Insbesondere wird sie dabei auf Führungsschienen bewegt. Alternativ bevorzugt dazu wird die Radarvorrichtung an einem mobilen Roboter oder einem unbemannten Fluggerät angeordnet, wobei letzteres vorteilhaft durch eine entsprechende Autopilotensteuerung insbesondere eine Außenwand eines Gebäudes abfliegt, um das oben genannte dreidimensionale Rechnermodell der Bauelemente des Gebäudes zu erzeugen.

Gemäß einer weiteren vorteilhaften Ausführungsform werden die an der Vielzahl der Positionen erfassten reflektierten Mikrowellensignale nach einem Verfahren einer synthetischen Apertur oder durch bloße Aneinanderreihung zu einem Gesamtbild zusammengefügt. Insbesondere erfolgt die Aneinanderreihung positionsrichtig, das heißt sich aneinander anschließend und konsistent, sodass die nacheinander erfassten reflektierten Mikrowellensignale über verschiedene Positionen des Gebäudes zu einem Gesamtbild zusammengefügt werden können. Nach dem Verfahren einer synthetischen Apertur wird die Bewegung der Radarvorrichtung über eine gewisse Weglänge ausgenutzt, um in dieser Richtung eine deutlich höhere räumliche Auflösung zu erzielen, wobei das Zusammensetzen der Einzelbilder diese hohe Auflösung jedoch auf eine prinzipiell unbegrenzte Fläche des Gebäudes ausdehnt.

Gemäß einer weiteren vorteilhaften Ausführungsform umfasst eine jeweilige komplexe Permittivität einen jeweiligen Realteil und einen jeweiligen Imaginärteil, wobei der erste vorgegebene Datensatz und/oder der zweite vorgegebene Datensatz einen Zusammenhang zwischen jeweiligen Realteilen der komplexen Permittivitäten und Wärmeleitfähigkeiten angeben. Gerade bei der empirischen Erfassung von Informationen zur Erzeugung des ersten vorgegebenen Datensatzes kann sich ein linearer Zusammenhang zwischen einem jeweiligen Realteil der komplexen Permittivität und der jeweiligen Wärmeleitfähigkeit des jeweiligen Stoffes zeigen. Ebenso kann sich bei der empirischen Erfassung von Informationen zur Erzeugung des zweiten vorgegebenen Datensatzes ein linearer Zusammenhang zwischen einem jeweiligen Realteil der komplexen Permittivität und der spezifischen Wärmekapazität des jeweiligen Stoffes zeigen. In diesen Fällen kann vorteilhaft der jeweilige Imaginärteil der komplexen Permittivität vernachlässigt werden.

Gemäß einer weiteren vorteilhaften Ausführungsform werden für Bereiche des Gebäudes mit überlappend erfassten reflektierten Mikrowellensignalen die erfassten reflektierten Mikrowellensignale zumindest abschnittsweise gemittelt. Das Mitteln der erfassten reflektierten Mikrowellensignale an Bereichen eines Bauelements oder eines Gebäudeteils, die mehrfach durch Mikrowellensignale angestrahlt werden, mindert vorteilhaft Verfälschungen, die durch Interferenzen oder andere Effekte zu einem qualitativ schlechteren erfassten reflektierten Mikrowellensignal führen würden. Fehler, Rauschen sowie sehr kleinskalige Fluktuationen der tatsächlichen Materialverteilung werden daher vorteilhaft ebenfalls gemittelt und somit die Qualität des Informationsgehalts der erfassten reflektierten Mikrowellensignale für das Gesamtergebnis der Gebäudecharakterisierung verbessert.

Gemäß einer weiteren vorteilhaften Ausführungsform erfolgen das Emittieren der Mikrowellensignale und/oder das Erfassen der reflektierten Mikrowellensignale vollpolarimetrisch. Insbesondere erfolgt das Emittieren von linear oder auch zirkular polarisierten Mikrowellensignalen und der Empfang von dazu ko- oder kreuzpolarisierten Mikrowellensignalen. Bevorzugt wird weiterhin eine bi-statische Anordnung einer Sende- und einer Empfangsantenne mit einem entsprechenden Winkel der Hauptstrahlrichtung zur Wandnormalen verwendet.

Gemäß einer weiteren vorteilhaften Ausführungsform wird die Reflexionscharakteristik insbesondere des Rechnermodells analytisch ermittelt, indem ein Rechnermodell verwendet wird, das ein Modell der Leitungstheorie umfasst, bei dem gedachte Hochfrequenzleitungen unterschiedlicher Länge und unterschiedlicher komplexer Permittivität in Reihe geschaltet sind und am Ausgang einen Abschlusswiderstand aufweisen, um einen frequenzabhängigen Reflexionsfaktor des Rechnermodells zu ermitteln.

Ein weiterer Aspekt der Erfindung betrifft ein Radarsystem mit einer Recheneinheit, wobei das Radarsystem zum Ausführen des Verfahrens speziell eingerichtet und ausgeführt ist.

Gemäß einer vorteilhaften Ausführungsform wird das Radarsystem bi-statisch verwendet, das heißt, mit separater Sende- und Empfangsantenne verwendet. Vorteilhaft lässt sich somit eine Einfallswinkelabhängigkeit nutzen.

Vorteile und bevorzugte Weiterbildungen des vorgeschlagenen Radarsystems ergeben sich durch eine analoge und sinngemäße Übertragung der im Zusammenhang mit dem vorgeschlagenen Verfahren vorstehend gemachten Ausführungen.

Ein weiterer Aspekt der Erfindung betrifft ein Fluggerät mit einem solchen Radarsystem. Das Fluggerät ist insbesondere ein unbemanntes Fluggerät, bevorzugt ein Multikopter wie Quadrokopter oder Hexakopter, an dem ein solches Radarsystem angeordnet ist. Das unbemannte Fluggerät wird bevorzugt manuell gesteuert, alternativ bevorzugt wird eine vorgegebene Bahn durch Einsatz eines Autopilotensystems abgeflogen, jeweils um großflächig Gebäudewände zu erfassen und ein 3-D Modell der Gebäude-Bauelemente zu erzeugen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Verfahren zum Ermitteln eines Maßes für einen Wärmedurchgang eines Gebäude-Bauelements gemäß einem Ausführungsbeispiel der Erfindung,
- Fig. 2: ein Radarsystem, das gemäß dem Ausführungsbeispiel nach Fig. 1 verwendet wird,
- Fig. 3: einen beispielhaften empirisch ermittelten Zusammenhang zwischen komplexen Permittivitäten und spezifischen Wärmekapazitäten, und
- Fig. 4: einen beispielhaften empirisch ermittelten Zusammenhang zwischen komplexen Permittivitäten und Wärmeleitfähigkeiten.

Die Darstellungen in den Figuren sind schematisch und nicht maßstäblich.

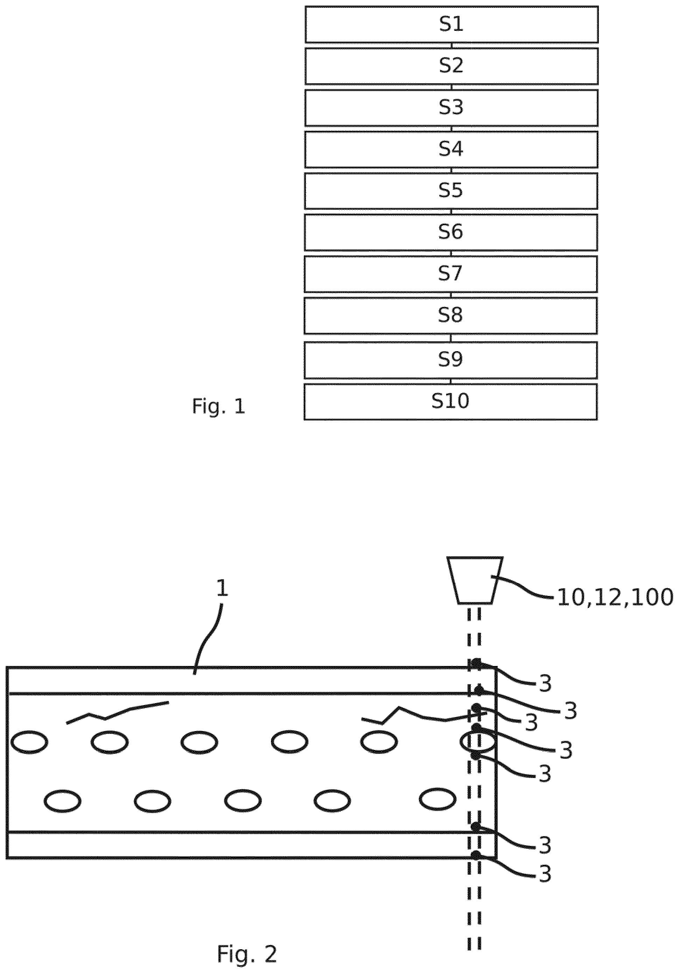

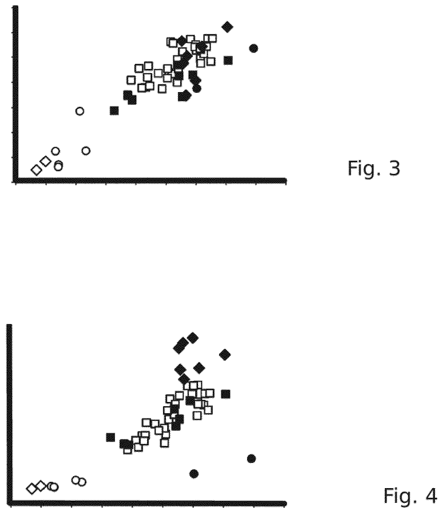

Fig. 1 zeigt ein Verfahren zum Ermitteln eines Maßes für einen Wärmedurchgang eines Gebäude-Bauelements 1 und zum Ermitteln eines Maßes für eine Wärmekapazität des Gebäude-Bauelements 1. Ein solches Gebäude-Bauelement 1 ist in Fig. 2 in einer Schnittansicht dargestellt. Ebenfalls ist in Fig. 2 ein entsprechendes Radarsystem 10 dargestellt, mit Hilfe dessen das im Folgenden dargestellte Verfahren ausgeführt werden kann. Zum besseren Verständnis der folgenden Beschreibung des Verfahrens kann daher auch die Fig. 2 herangezogen werden. In einem ersten Schritt des Verfahrens erfolgt das Emittieren S1 von Mikrowellensignalen in einer Vielzahl von Frequenzen auf das betrachtete Bauelement 1. Hierbei wird ein sinusförmiges Mikrowellensignal ausgesendet, dessen Frequenz sich kontinuierlich von einer Startfrequenz bis zu einer Endfrequenz über die Zeit erhöht. Im folgenden Schritt erfolgt das Erfassen S2 von am jeweiligen Bauelement 1 und an Übergängen von Schichten 3 im jeweiligen Bauelement 1 reflektierten Mikrowellensignalen. Da entlang einer gedachten Geraden durch das Bauelement 1 mehrere Wechsel von Materialien durchlaufen werden, werden Reflexionen von mehreren Schichtübergängen erfasst. Das Emittieren der Mikrowellensignale wie das Erfassen der reflektierten Mikrowellensignale erfolgt hierbei vollpolarimetrisch mit der Polarisationskombination HH-HV-VV, wobei ,H' für horizontal und ,V' für vertikal steht und die erste Bezeichnung den Sender und die zweite den Empfänger markiert. Die Kombination VH ist in der Theorie bei nicht gyrotropen Medien identisch zu HV, was bei der Mehrzahl von Materialien zutrifft. Darauf folgt das Ermitteln S3 einer Anzahl der Schichten 3 im jeweiligen Bauelement 1 aus den reflektierten Mikrowellensignalen durch Laufzeitbestimmung der reflektierten Mikrowellensignale und durch Zählen der einzelnen Reflexionen. Das aktuell betrachtete Bauelement wird nun elektromagnetisch in einem Rechnermodell modelliert S4. Hierzu weist das Rechnermodell einen Schichtaufbau des Bauelements 1 mit der ermittelten Anzahl der Schichten 3 auf. Variable Parameter dagegen sind jeweilige Schichtdicken und jeweilige komplexe Permittivitäten der Schichten 3. Für diese variablen Parameter des Rechnermodells werden zunächst Startwerte vorgegeben S5. Die Startwerte werden nach der komplexen Permittivität von Beton und nach einer geschätzten Dicke des Bauelements vorgegeben. Daran schließt sich das iterative Anpassen S6 des Rechnermodells durch wiederholtes Variieren der Werte der variablen Parameter und durch Auswählen desjenigen Satzes von Werten der variablen Parameter mit der besten Übereinstimmung zwischen i) einem analytisch ermittelten Reflexionsfaktor des Rechnermodells und ii) einem aus einem Verhältnis zwischen den emittierten und den erfassten reflektieren Mikrowellensignalen ermittelten tatsächlichen Reflexionsfaktor. Hierzu wird ein entsprechend kalibriertes Radargerät verwendet, welches durch Vergleich der Spektren des ausgesendeten sinusförmigen Mikrowellensignals mit dem reflektierten Mikrowellensignal einen tatsächlichen Reflexionsfaktor ermittelt. Für jede der im Rechnermodell mit dem ausgewählten Satz der variablen Parameter modellierten Schichten 3 erfolgt nun das Ermitteln S7 einer jeweiligen Wärmeleitfähigkeit der jeweiligen Schicht auf Basis eines ersten vorgegebenen Datensatzes, wobei der erste vorgegebene Datensatz einen Zusammenhang zwischen komplexen Permittivitäten und Wärmeleitfähigkeiten angibt. Eine jeweilige komplexe Permittivität weist einen jeweiligen Realteil und einen jeweiligen Imaginärteil auf, wobei der erste vorgegebene Datensatz einen Zusammenhang zwischen jeweiligen Realteilen der komplexen Permittivitäten und Wärmeleitfähigkeiten angibt. Ein solcher beispielhafter erster vorgegebener Datensatz ist in der Fig. 4 gezeigt. Ebenso wird für jede der im Rechnermodell mit dem ausgewählten Satz der variablen Parameter modellierten Schichten 3 eine jeweilige spezifische Wärmekapazität der jeweiligen Schicht auf Basis eines zweiten vorgegebenen Datensatzes ermittelt S9, wobei der zweite vorgegebene Datensatz einen Zusammenhang zwischen den Realteilen der komplexen Permittivitäten und spezifischen Wärmekapazitäten angibt. Ein solcher beispielhafter zweiter vorgegebener Datensatz ist in der Fig. 3 gezeigt. Das Maß für den Wärmedurchgang des jeweiligen Bauelements 1 wird dann aus den ermittelten Schichtdicken und Wärmeleitfähigkeiten der jeweiligen Schichten 3 ermittelt S8. Analog dazu wird eine gesamten Wärmekapazität des jeweiligen Bauelements 1 aus den ermittelten jeweiligen Schichtdicken und den ermittelten spezifischen Wärmekapazitäten der jeweiligen Schichten 3 ermittelt S10.

Fig. 2 zeigt symbolisch ein unbemanntes Fluggerät 100 mit einem Radarsystem 10, welches wiederum eine Recheneinheit 12 aufweist, um das Verfahren nach Fig. 1 auszuführen. Hierbei ist ein horizontaler Schnitt durch das Gebäude-Bauelement 1, nämlich eine Stahlbetonmauer, gezeigt. Diese Mauer weist als Kern eine Betonplatte mit Stahlarmierungen auf. Die Stahlarmierungen sind dabei als ellipsenförmige "Störungen" gezeichnet. Auf der Innenseite wie auf der Außenseite des Gebäude-Bauelements 1 ist Putz aufgetragen. Außerdem befinden sich altersbedingt im Beton zwei kleinere Risse. Das Radarsystem 10 sendet einen Strahl von Mikrowellensignalen in Richtung der Oberfläche des Gebäude-Bauelements 1 aus, wobei der Strahl der Mikrowellensignale im Wesentlichen in eine definierte Abstrahlrichtung läuft, dabei aber jedoch eine gewisse laterale Ausdehnung in einem leicht fächerförmigen Verlauf aufweist. Ein erster Übergang zwischen den Schichten 3 befindet sich dabei zum einen an der Oberfläche der Außenseite des Gebäude-Bauelements 1, ein weiterer Schichtübergang zwischen Putz und Beton, ein weiterer Schichtübergang am Riss im Beton, ein weiterer Schichtübergang von Beton zur Stahlarmierung, ein weiterer Schichtübergang von der Stahlarmierung wieder zum Beton, und analog dazu weiterhin vom Beton zum Putz und vom Putz zur Innenseite der Mauer. Alle diese Schichtübergänge erzeugen ein jeweiliges Radarecho für das Radarsystem 10, das heißt erscheinen als Reflexion der ausgesendeten Mikrowellensignale, da sich an den Schichtübergängen die Lichtgeschwindigkeit ändert und ein Wellenwiderstandsprung die Folge ist. Ein jeweiliger Schichtübergang ist in der Fig. 2 mit einem kleinen Endkreis einer jeweiligen Bezugszeichenlinie für das Bezugszeichen der Schichten 3 angedeutet. Zur Wirkungsweise des Adersystems 10 mit seiner Recheneinheit 12, wird auf die Erläuterungen des Verfahrens nach Fig. 1 verwiesen. Insbesondere wird die Radarvorrichtung der Fig. 1, die dem Radarsystem 10 der Fig. 2 entspricht und zum Emittieren der Mikrowellensignale und zum Erfassen der reflektierten Mikrowellensignale dient, entlang der Mauer des Gebäudes bewegt, um in einer Vielzahl von Positionen der Radarvorrichtung gegenüber dem Gebäude das Verfahren nach Fig. 1 zu wiederholen, sodass das Rechnermodell sämtliche Stahlarmierungen, Risse und anderes in der Mauer erfasst, wie in Fig. 2 skizziert. Hierfür werden die an der Vielzahl der Positionen erfassten reflektierten Mikrowellensignale nach einem Verfahren einer synthetischen Apertur zu einem Gesamtbild zusammengefügt, wobei empfangene reflektierte Mikrowellensignale für Bereiche des Gebäudes mit überlappender Anstrahlung gemittelt werden.

Fig. 3 zeigt einen empirisch ermittelten Zusammenhang zwischen komplexen Permittivitäten und spezifischen Wärmekapazitäten, der den zweiten Datensatz darstellt. Die horizontale Achse beschreibt dabei einen linearen Wertebereich zwischen 0,2 und 0,65, wobei diese Werte der horizontalen Achse das Ergebnis des folgenden Ausdrucks wiedergeben: (ε'ᵣ-1)/(ε'ᵣ+2), wobei ε'ᵣ den jeweiligen Realteil der komplexen Permittivität angibt. Die vertikale Achse beschreibt dabei einen linearen Wertebereich zwischen 0,4 und 1,8, wobei diese Werte der vertikalen Achse die spezifische Wärmekapazität in der Einheit [MJ/m³K] ("Megajoule pro Kubikmeter und Kelvin") angeben. Die verschiedenen Symbole, die näherungsweise auf einer Geraden liegen, beschreiben verschiedene Baustoffe. So beschreiben beispielsweise nicht ausgefüllte Rauten Porenbeton, ausgefüllte Rauten Kalksandstein, ausgefüllte Quadrate gelbe Ziegel, nicht ausgefüllte Quadrate rote Ziegel, ausgefüllte Kreise Leichtbeton geschlossen, und nicht ausgefüllte Kreise Leichtbeton offen. Ist eine jeweilige komplexe Permittivität für eine Schicht des Gebäude-Bauelements 1 ermittelt worden, kann aus dessen Realteil in obige Formel eingesetzt werden und durch grafische Lösung oder lineare Interpolation die zugehörige spezifischen Wärmekapazität ausgelesen werden.

Fig. 4 zeigt einen empirisch ermittelten Zusammenhang zwischen komplexen Permittivitäten und Wärmeleitfähigkeiten, der den ersten Datensatz darstellt. Die horizontale Achse beschreibt dabei einen linearen Wertebereich zwischen 0,2 und 0,65, wobei diese Werte der horizontalen Achse dem Ergebnis des folgenden Zusammenhangs entsprechen: (ε'ᵣ-1)/(ε'ᵣ+2), wobei ε'ᵣ den jeweiligen Realteil der komplexen Permittivität angibt. Die vertikale Achse beschreibt dabei einen linearen Wertebereich zwischen 0 und 1,8, wobei diese Werte der vertikalen Achse die Wärmeleitfähigkeit in der Einheit [W/mK] ("Watt pro Meter und Kelvin") angeben. Die verschiedenen Symbole, die näherungsweise auf einer Geraden liegen, beschreiben verschiedene Baustoffe. So beschreiben beispielsweise nicht ausgefüllte Rauten Porenbeton, ausgefüllte Rauten Kalksandstein, ausgefüllte Quadrate gelbe Ziegel, nicht ausgefüllte Quadrate rote Ziegel, ausgefüllte Kreise Leichtbeton geschlossen, und nicht ausgefüllte Kreise Leichtbeton offen. Ist eine jeweilige komplexe Permittivität für eine Schicht des Gebäude-Bauelements 1 ermittelt worden, kann aus dessen Realteil in obige Formel eingesetzt werden und durch grafische Lösung oder lineare Interpolation die zugehörige Wärmeleitfähigkeit ausgelesen werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Bauelement
- 3: Schichten
- 10: Radarsystem
- 12: Recheneinheit
- 100: Fluggerät

- S1: Emittieren
- S2: Erfassen
- S3: Ermitteln
- S4: Modellieren
- S5: Vorgeben
- S6: Anpassen
- S7: Ermitteln
- S8: Ermitteln
- S9: Ermitteln
- S10: Ermitteln

## Patentansprüche

1. Verfahren zum Ermitteln eines Maßes für einen Wärmedurchgang eines Gebäude-Bauelements (1), aufweisend die Schritte:
- Emittieren (S1) von Mikrowellensignalen in einer Vielzahl von Frequenzen auf ein jeweiliges Bauelement (1),
- Erfassen (S2) von am jeweiligen Bauelement (1) und an Übergängen von Schichten (3) im jeweiligen Bauelement (1) reflektierten Mikrowellensignalen,
- Ermitteln (S3) einer Anzahl der Schichten (3) im jeweiligen Bauelement (1) aus den reflektierten Mikrowellensignalen insbesondere durch Laufzeitbestimmung der reflektierten Mikrowellensignale,
- Elektromagnetisches Modellieren (S4) des jeweiligen Bauelements (1) in einem Rechnermodell, wobei das Rechnermodell einen Schichtaufbau des jeweiligen Bauelements (1) mit der ermittelten Anzahl der Schichten (3) aufweist und als variable Parameter jeweilige Schichtdicken und jeweilige komplexe Permittivitäten der Schichten (3) umfasst,
- Vorgeben (S5) von Startwerten für die variablen Parameter des Rechnermodells,
- iteratives Anpassen (S6) des Rechnermodells durch wiederholtes Variieren der Werte der variablen Parameter und durch Auswählen eines Satzes von Werten der variablen Parameter anhand einer Übereinstimmung zwischen
i) einer analytisch oder durch Simulation ermittelten Reflexionscharakteristik des Rechnermodells und
ii) einer aus einem Verhältnis zwischen den emittierten und den erfassten reflektieren Mikrowellensignalen ermittelten tatsächlichen Reflexionscharakteristik,
- für jede der im Rechnermodell mit dem ausgewählten Satz der variablen Parameter modellierten Schichten (3): Ermitteln (S7) einer jeweiligen Wärmeleitfähigkeit der jeweiligen Schicht auf Basis eines ersten vorgegebenen Datensatzes, wobei der erste vorgegebene Datensatz einen Zusammenhang zwischen komplexen Permittivitäten und Wärmeleitfähigkeiten angibt, und
- Ermitteln (S8) des Maßes für den Wärmedurchgang des jeweiligen Bauelements (1) aus den ermittelten Schichtdicken und Wärmeleitfähigkeiten der jeweiligen Schichten (3).

2. Verfahren nach Anspruch 1,
wobei das Verfahren weiterhin zum Ermitteln eines Maßes für eine Wärmekapazität des Gebäude-Bauelements (1) dient, weiterhin aufweisend die Schritte:
- für jede der im Rechnermodell mit dem ausgewählten Satz der variablen Parameter modellierten Schichten (3): Ermitteln (S9) einer jeweiligen spezifischen Wärmekapazität der jeweiligen Schicht auf Basis eines zweiten vorgegebenen Datensatzes, wobei der zweite vorgegebene Datensatz einen Zusammenhang zwischen komplexen Permittivitäten und spezifischen Wärmekapazitäten angibt, und
- Ermitteln (S10) einer gesamten Wärmekapazität des jeweiligen Bauelements (1) aus den ermittelten jeweiligen Schichtdicken und den ermittelten spezifischen Wärmekapazitäten der jeweiligen Schichten (3).

3. Verfahren nach einem der vorhergehenden Ansprüche,
wobei das Emittieren der Mikrowellensignale und das Erfassen der reflektierten Mikrowellensignale durch eine Radarvorrichtung erfolgt, wobei die Radarvorrichtung entlang eines Gebäudes bewegt wird und wobei in einer Vielzahl von Positionen der Radarvorrichtung gegenüber dem Gebäude das Verfahren nach Anspruch 1 oder Anspruch 2 wiederholt wird.

4. Verfahren nach Anspruch 3,
wobei die an der Vielzahl der Positionen erfassten reflektierten Mikrowellensignale nach einem Verfahren einer synthetischen Apertur oder durch Aneinanderreihung zu einem Gesamtbild zusammengefügt werden.

5. Verfahren nach einem der vorhergehenden Ansprüche,
wobei eine jeweilige komplexe Permittivität einen jeweiligen Realteil und einen jeweiligen Imaginärteil umfasst, wobei der erste vorgegebene Datensatz einen Zusammenhang zwischen jeweiligen Realteilen der komplexen Permittivitäten und Wärmeleitfähigkeiten angibt.

6. Verfahren nach einem der Ansprüche 3 bis 5,
wobei für Bereiche des Gebäudes mit überlappend erfassten reflektierten Mikrowellensignalen die erfassten reflektierten Mikrowellensignale zumindest abschnittsweise gemittelt werden.

7. Verfahren nach einem der vorhergehenden Ansprüche,
wobei das Emittieren der Mikrowellensignale und/oder das Erfassen der reflektierten Mikrowellensignale vollpolarimetrisch erfolgt.

8. Verfahren nach einem der vorhergehenden Ansprüche,
wobei die Reflexionscharakteristik analytisch ermittelt wird, indem ein Rechnermodell verwendet wird, das ein Modell der Leitungstheorie umfasst, bei dem gedachte Hochfrequenzleitungen unterschiedlicher Länge und unterschiedlicher komplexer Permittivität in Reihe geschaltet sind und am Ausgang einen Abschlusswiderstand aufweisen, um einen frequenzabhängigen Gesamtreflexionsfaktor des Rechnermodells zu ermitteln.

9. Radarsystem (10) mit einer Recheneinheit (12), wobei das Radarsystem (10) zum Ausführen des Verfahrens nach einem der vorhergehenden Ansprüche speziell eingerichtet und ausgeführt ist.

10. Fluggerät (100) mit einem Radarsystem (10) nach Anspruch 9.

## Claims

1. Method for the determination of a metric for a thermal transmittance of a building element (1), comprising the steps:
- Emission (S1) of microwave signals in a multiplicity of frequencies onto a particular building element (1),
- Detection (S2) of microwave signals that are reflected at the particular building element (1), and at transitions between layers (3) in the particular building element (1),
- Determination (S3) of a number of layers (3) in the particular building element (1) from the reflected microwave signals, in particular by determination of the propagation time of the reflected microwave signals,
- Electromagnetic modelling (S4) of the particular building element (1) in a computer model, wherein the computer model has a layered structure of the particular building element (1), with the determined number of layers (3), and comprises particular layer thicknesses and particular complex permittivities of the layers (3) as variable parameters,
- Specification (S5) of initial values for the variable parameters of the computer model,
- Iterative customisation (S6) of the computer model by repeated variation of the values of the variable parameters, and by selection of a set of values of the variable parameters on the basis of a match between
i) a reflection characteristic of the computer model, determined analytically or by simulation, and
ii) an actual reflection characteristic, determined from a ratio between the emitted and the detected reflected microwave signals,
- For each of the layers (3) modelled in the computer model with the selected set of variable parameters: determination (S7) of a particular thermal conductivity of the particular layer on the basis of a first predetermined data set, wherein the first predetermined data set indicates a relationship between complex permittivities and thermal conductivities, and
- Determination (S8) of the metric for the heat transfer of the particular building element (1) from the determined layer thicknesses and thermal conductivities of the particular layers (3).

2. Method in accordance with Claim 1, wherein
the method is furthermore used for the determination of a metric for a heat capacity of the building element (1), furthermore comprising the steps:
- For each of the layers (3) modelled in the computer model with the selected set of variable parameters: determination (S9) of a particular specific heat capacity of the particular layer on the basis of a second predetermined data set, wherein the second predetermined data set indicates a relationship between complex permittivities and specific heat capacities, and
- Determination (S10) of a total heat capacity of the particular building element (1) from the determined particular layer thicknesses and the determined specific heat capacities of the particular layers (3).

3. Method in accordance with one of the preceding claims, wherein
the emission of the microwave signals, and the detection of the reflected microwave signals, are achieved by means of a radar device, wherein
the radar device is moved along a building, and wherein
the method in accordance with Claim 1 or Claim 2 is repeated in a multiplicity of positions of the radar device with respect to the building.

4. Method in accordance with Claim 3, wherein
the reflected microwave signals detected at the multiplicity of positions are combined into an overall image using a synthetic aperture method, or by apposition.

5. Method in accordance with one of the preceding claims, wherein
a particular complex permittivity comprises a particular real part and a particular imaginary part, wherein
the first prescribed data set specifies a relationship between particular real parts of the complex permittivities and thermal conductivities.

6. Method in accordance with one of the Claims 3 to 5, wherein
for areas of the building with overlapping detected reflected microwave signals, the detected reflected microwave signals are averaged, at least section by section.

7. Method in accordance with one of the preceding claims, wherein
the emission of the microwave signals, and/or the detection of the reflected microwave signals, is fully polarimetric.

8. Method in accordance with one of the preceding claims, wherein
the reflection characteristic is analytically determined, in that a computer model is used, which comprises a line theory model in which imaginary highfrequency lines of different lengths and different complex permittivities are connected in series, and have a termination resistor at the output, so as to determine a frequency-dependent total reflection factor of the computer model.

9. Radar system (10) with a computing unit (12), wherein the radar system (10) is specifically designed and equipped for the execution of the method in accordance with one of the preceding claims.

10. Aircraft (100) with a radar system (10) in accordance with Claim 9.

## Revendications

1. Procédé de détermination d'une mesure d'un débit de chaleur d'un élément de construction de bâtiment (1), présentant les étapes :
- d'émettre (S1) des signaux à micro-ondes dans une pluralité de fréquences sur un élément de construction respectif (1),
- de détecter (S2) des signaux à micro-ondes réfléchis sur l'élément de construction (1) respectif et sur des transitions de couches (3) dans l'élément de construction (1) respectif,
- de déterminer (S3) un nombre de couches (3) dans l'élément de construction (1) respectif à partir des signaux à micro-ondes réfléchis, en particulier par détermination du temps écoulé des signaux à micro-ondes réfléchis,
- d'effectuer une modélisation électromagnétique (S4) de l'élément de construction (1) respectif dans un modèle de calculateur, dans lequel le modèle de calculateur présente un montage en couches de l'élément de construction (1) respectif avec le nombre déterminé de couches (3) et comprend en tant que paramètres variables des épaisseurs de couche respectives et des permittivités complexes respectives des couches (3),
- de prédéfinir (S5) des valeurs de départ pour les paramètres variables du modèle de calcul,
- d'effectuer une adaptation itérative (S6) du modèle de calculateur par une variation répétée des valeurs des paramètres variables et par sélection d'un jeu de valeurs des paramètres variables à l'aide d'une concordance entre
i) une caractéristique de réflexion déterminée de manière analytique ou par simulation du modèle de calculateur et
ii) une caractéristique de réflexion effective déterminée à partir d'un rapport entre les signaux à micro-ondes réfléchis émis et détectés,
- pour chaque couche (3) modélisée dans le modèle de calculateur avec le jeu sélectionné des paramètres variables : de déterminer (S7) une conductivité thermique respective de la couche respective sur la base d'un premier jeu de données prédéfini, dans lequel le premier jeu de données prédéfini indique un lien entre des permittivités complexes et des conductivités thermiques, et
- de déterminer (S8) la mesure du débit de chaleur de l'élément de construction respectif (1) à partir des épaisseurs de couche et des conductivités thermiques déterminées des couches (3) respectives.

2. Procédé selon la revendication 1,
dans lequel le procédé sert en outre à déterminer une mesure d'une capacité thermique de l'élément de construction (1) pour bâtiment, présentant en outre les étapes :
- pour chacune des couches (3) modélisées avec le jeu sélectionné des paramètres variables : de détermination (S9) d'une capacité thermique spécifique respective de la couche respective en se basant sur un second jeu de données prédéfini, dans lequel le second jeu de données prédéfini indique un lien entre des permittivités complexes et des capacités thermiques spécifiques,
et
- de détermination (S10) d'une capacité thermique totale de l'élément de construction (1) respectif à partir des épaisseurs de couche respectives déterminées et des capacités thermiques spécifiques déterminées des couches respectives (3) .

3. Procédé selon l'une des revendications précédentes,
dans lequel l'émission des signaux à micro-ondes et la détection des signaux à micro-ondes réfléchis est effectuée par un dispositif radar, dans lequel le dispositif radar est déplacé le long d'un bâtiment et dans lequel le procédé selon la revendication 1 ou la revendication 2 est répété dans une pluralité de positions du dispositif radar par rapport au bâtiment.

4. Procédé selon la revendication 3, dans lequel les signaux à micro-ondes réfléchis détectés à la pluralité des positions sont ajoutés en une image globale selon un procédé d'une ouverture synthétique ou par mise en rangées.

5. Procédé selon l'une des revendications précédentes, dans lequel une permittivité complexe respective comprend une partie réelle respective et une partie imaginaire respective, dans lequel le premier jeu de données prédéfini indique un lien entre des parties réelles respectives des permittivités complexes et des capacités thermiques.

6. Procédé selon l'une des revendications 3 à 5,
dans lequel pour des zones du bâtiment avec des signaux à micro-ondes réfléchis détectés qui se chevauchent, les signaux à micro-ondes réfléchis détectés sont moyennés au moins par tronçons.

7. Procédé selon l'une des revendications précédentes,
dans lequel l'émission des signaux à micro-ondes et/ou la détection des signaux à micro-ondes réfléchis est effectuée à polarimétrie pleine.

8. Procédé selon l'une des revendications précédentes,
dans lequel la caractéristique de réflexion est déterminée de manière analytique, en ce qu'un modèle de calculateur est employé qui comprend un modèle de la théorie de transmission, dans lequel des lignes haute fréquences non matérialisées de différentes longueurs et de permittivité de différentes complexités sont branchées en série, et présentent une résistance terminale en sortie, pour déterminer un facteur de réflexion total du modèle de calculateur qui est fonction des fréquences.

9. Système de radar (10) comprenant une unité de calcul (12), dans lequel le système de radar (10) est équipé et conçu spécialement pour exécuter le procédé selon l'une des revendications précédentes.

10. Appareil volant (100) comprenant un système de radar (10) selon la revendication 9.
